# EUROPÄISCHE PATENTSCHRIFT

(11) **EP 3 173 694 B1**
(45) Veröffentlichungstag und Bekanntmachung des Hinweises auf die Patenterteilung: **06.06.2018**
(21) Anmeldenummer: 16200528.4
(22) Anmeldetag: 24.11.2016
(51) Int. Cl.: F21V 33/00, F21S 8/00, F21S 8/04, F24D 13/02, F21V 8/00, F21Y 115/10

(54) **VORRICHTUNG FÜR DIE KOMBINIERTE ABGABE VON WÄRMESTRAHLUNG UND LICHT**
DEVICE FOR COMBINED DELIVERY OF HEAT AND LIGHT
DISPOSITIF DE DISTRIBUTION COMBINÉE DE RAYONNEMENT THERMIQUE ET DE LUMIÈRE

(30) Priorität: 30.11.2015 AT 510212015; 22.07.2016 AT 506732016
(43) Veröffentlichungstag der Anmeldung: 31.05.2017
(73) Patentinhaber: HL Innovation GmbH, 6600 Reutte (AT)
(72) Erfinder: Hackl, Thomas, 6600 Breitenwang (AT)
(74) Vertreter: Torggler & Hofinger Patentanwälte

(56) Entgegenhaltungen:
- EP-A1- 2 412 521
- CN-U- 203 099 772
- DE-U1-202013 103 223
- DE-U1-202014 100 735
- GB-A- 2 361 990
- JP-A- 2005 337 697

## Beschreibung

Die vorliegende Erfindung betrifft eine Vorrichtung für die kombinierte Abgabe von Wärmestrahlung und Licht mit den Merkmalen des Oberbegriffs des Anspruchs 1.

Bekannt sind einerseits Vorrichtungen mit einem flächigen Lichtabgabebereich und andererseits Vorrichtungen für die Abgabe von Wärmestrahlung. Nachteilig ist, dass eine gleichzeitige Beleuchtung und Heizung einen großen Platzbedarf aufweist, gesonderte Anschlüsse für Beleuchtung und Heizung benötigt werden und einen hohen Installationsaufwand verursacht.

Aus der Druckschrift CN 203099772 U geht eine Vorrichtung für die kombinierte Abgabe von Wärmestrahlung und Licht hervor, die Leuchtelemente, vorzugsweise LEDs, und einen transparenten Grundkörper ("light guide plate 8") mit einer Mantel-, Deck- und Grundfläche aufweist, wobei die Leuchtelemente (4, 5) an der Mantelfläche des Grundkörpers angeordnet sind, sodass emittiertes Licht in den Grundkörper eintritt, und wobei eine Streuvorrichtung (6) vorgesehen ist, die das eingetretene Licht an Deck- oder Grundfläche des Grundkörpers auskoppelt.

Die Druckschrift WO 2015/124296 A1 betrifft eine Vorrichtung zur Abgabe von Licht mit einem Leuchtelement, welches eine Vielzahl von LEDs aufweist. Die Vorrichtung umfasst einen zumindest teiltransparenten plattenförmigen Grundkörper (12), der eine Mantelfläche (16), eine Deckfläche (42) und eine Grundfläche (43) aufweist. Das Leuchtelement (14) weist eine Vielzahl von LEDs (20) auf, die an der Mantelfläche (16) des Grundkörpers (12) angeordnet sind, sodass vom Leuchtelement (14) emittiertes Licht (24) in den Grundkörper eintritt. Im Grundkörper (12) ist eine Streuvorrichtung (Streukörper 54) vorgesehen, die in den Grundkörper eingetretenes Licht an der Deckfläche des Grundkörpers auskoppelt.

Aus den Offenlegungsschriften EP 2 412 521, GB 2 361 990 und JP 2005 337697 sind Vorrichtungen des Stands der Technik bekannt. Aufgabe der Erfindung ist die Bereitstellung eines gattungsgemäßen Vorrichtung, die kompakter ausgebildet und leicht zu installieren ist.

Diese Aufgabe wird durch einen Vorrichtung mit den Merkmalen des Anspruchs 1 gelöst. Vorteilhafte Ausführungsformen der Erfindung sind in den abhängigen Ansprüchen definiert.

Gemäß der Erfindung kombiniert die Vorrichtung zumindest eine Wärmequelle (Heizmatte und/oder zumindest eine IR-LED) und zumindest ein Leuchtelement auf eine äußerst kompakte Weise, da die Dimensionierung der Vorrichtung im Wesentlichen durch die Dimensionierung des plattenförmigen Grundkörpers gegeben ist und der Grundkörper zumindest großteils sowohl für die Beleuchtung als auch für die Heizung zur Verfügung steht. Der Grundkörper ist opak oder zumindest teiltransparent (Durchlässigkeit z. B. von etwa 70 % bis etwa 100%) ausgebildet. Zumindest ein Teil des von dem zumindest einen Leuchtelement emittierten Lichts tritt über die Mantelfläche in den Grundkörper ein und aufgrund der Streuung durch eine im Grundkörper angeordnete Streuvorrichtung zumindest teilweise durch die Deckfläche aus. Um Licht in Richtung der Deckfläche zu emittieren, welches in Richtung der Grundfläche gestreut wird, ist benachbart zur Grundfläche des Grundkörpers eine vorzugsweise aus Kunststoff bestehende Lichtreflektorschicht angeordnet. Es kann vorgesehen sein, dass die Lichtreflektorschicht zwischen der Wärmequelle und dem Grundkörper angeordnet ist.

Es kann vorgesehen sein, dass die zumindest eine Wärmequelle eine Heizmatte aufweist. In diesem Fall kann vorgesehen sein, dass zumindest eine der Oberflächen der Heizmatte lichtreflektierend ausgebildet ist, sodass die Anordnung einer gesonderten Lichtreflektorschicht zwischen der Wärmequelle und dem Grundkörper nicht erforderlich ist.

Es kann vorgesehen sein, dass die zumindest eine Wärmequelle wenigstens eine, vorzugweise eine Vielzahl von IR-LED (Infrarote Strahlung emittierende Diode) aufweist.

Weist die Wärmequelle zumindest eine IR-LED auf, kann auch deren Strahlung von der Lichtreflektorschicht in Richtung der Deckfläche reflektiert werden.

Es kann vorgesehen sein, dass die zumindest eine Wärmequelle benachbart zu oder an der Grundfläche und/oder benachbart zu oder an der Deckfläche und/oder benachbart zu oder an einem zweiten Abschnitt der Mantelfläche des Grundkörpers angeordnet ist. Die zumindest eine Wärmequelle kann z. B. an oder benachbart zur Grundfläche des Grundkörpers angeordnet sein, während das zumindest eine Leuchtelement an oder benachbart zu einem ersten Abschnitt der Mantelfläche des Grundkörpers angeordnet ist. Es kann alternativ oder zusätzlich vorgesehen sein, dass die zumindest eine Wärmequelle an oder benachbart zu einem zweiten Abschnitt der Mantelfläche des Grundkörpers und damit ebenfalls beabstandet zu dem zumindest einen Leuchtelement angeordnet ist. Durch den Abstand wird erreicht, dass die Funktion des zumindest einen Leuchtelements durch die Wärme der Wärmequelle nicht gestört wird, was insbesondere dann von Bedeutung ist, wenn das zumindest eine Leuchtelement wenigstens eine LED (Lichtemittierende Diode) aufweist und die Wärmequelle eine Heizmatte aufweist. Weist die Wärmequelle wenigstens eine, vorzugsweise eine Vielzahl von IR-LED auf, können diese im selben Bereich angeordnet sein, wie das zumindest eine Leuchtelement.

Es kann vorgesehen sein, dass der Grundkörper prismatisch mit polygonaler Grundfläche ausgebildet ist.

Es kann vorgesehen sein, dass benachbart zur Deckfläche des Grundkörpers eine Diffusorschicht angeordnet oder in der Deckfläche des Grundkörpers ausgebildet ist. Diese bewirkt eine gleichmäßigere Lichtabgabe.

Es kann vorgesehen sein, dass der Grundkörper wenigstens teilweise in einem Rahmen angeordnet ist. Vorzugsweise ist der Rahmen umlaufend ausgebildet. Der Rahmen kann aus einem Metall, z. B. Aluminium, bestehen. Der Rahmen bewirkt eine mechanische Stabilisierung des Grundkörpers, in welchem durch die hindurchtretende Wärme mechanische Spannungen entstehen. Daneben kann der Rahmen als Montagefläche für die Vorrichtung ausgebildet sein. Es kann vorgesehen sein, dass das zumindest eine Leuchtelement und/oder IR-LED im Rahmen angeordnet ist bzw. sind (hier dient der Rahmen als Wärmeableitvorrichtung für Abwärme des Leuchtelements). Der Rahmen kann zur Anordnung einer Steuerung für das zumindest eine Leuchtelement und/oder die zumindest eine Wärmequelle dienen. Der Rahmen kann zur Anordnung von elektrischen Anschlüssen zur Versorgung des zumindest einen Leuchtelements und/oder der zumindest einen Wärmequelle und/oder der Steuerung oder von anderen Versorgungsanschlüssen dienen.

Die Montage der Vorrichtung kann über magnetische Mittel erfolgen. Zum Beispiel kann an der Vorrichtung zumindest ein Mittel aus einem magnetisierbaren Material angeordnet sein. An der Fläche, an welcher die Montage erfolgen soll, kann z. B. über einen Abstandhalter, zumindest ein Magnet angeordnet sein, welcher bei Kontakt mit dem Mittel aus einem magnetisierbaren Material die Vorrichtung hält. Die Anordnung von Magnet und Mittel aus einem magnetisierbaren Material kann natürlich auch umgekehrt wie vorstehend beschrieben erfolgen.

Es kann vorgesehen sein, dass die Vorrichtung zur Abgabe von Wärme mit einer Temperatur von etwa 20° C bis etwa 80° C ausgebildet ist. Ggf. kann die Temperatur durch einen Benutzer in Stufen oder stufenlos wählbar sein.

Es kann eine Steuerung zur Wahl der Temperatur der zumindest einen Wärmequelle und/oder der Farbe und/oder der Intensität des abgegebenen Lichts vorgesehen sein. Die Steuerung kann z. B. über einen Empfänger verfügen, sodass eine drahtlose Bedienung mittels eines Senders (z. B. eines Smartphones oder Tablets) erfolgen kann.

Es kann vorgesehen sein, dass benachbart zur Grundfläche des Grundkörpers eine Wärmeisolierschicht angeordnet ist.

Es kann vorgesehen sein, dass der Grundkörper aus einem Kunststoff, beispielsweise aus PMMA (Acrylglas), besteht.

Die Streuvorrichtung kann beispielsweise durch Lasern des Grundkörpers erzeugt werden.

Es kann vorgesehen sein, dass die Streuvorrichtung eine Vielzahl von Streuzentren aufweist, die vorzugsweise in einem Raster angeordnet sind. Es kann auch eine ungeordnete Anordnung vorgesehen sein. Die Tiefe der Streuzentren (Abstand von der Deckfläche) kann unterschiedlich sein. Es kann vorgesehen sein, dass die Konzentration der Streuzentren in einem zentralen Bereich des Grundkörpers größer ist als in einem Randbereich des Grundkörpers. Weist die zumindest eine Wärmequelle wenigstens eine IR-LED auf, kann deren Strahlung ebenfalls durch die Streuvorrichtung aus dem Grundkörper ausgekoppelt werden.

Es kann vorgesehen sein, dass benachbart zu oder an der Deckfläche des Grundkörpers oder ggf. der Diffusorschicht eine Dekorschicht, vorzugsweise in Form einer Bedruckung und/oder Beschichtung (z. B. dünne Holzplatten) der Deckfläche bzw. Diffusorschicht, angeordnet ist.

Es kann vorgesehen sein, dass benachbart zu oder an der Deckfläche des Grundkörpers oder ggf. der Diffusorschicht eine durch die Wärme der Wärmequelle wärmeaktivierbare Substanz zur Abgabe von Duftstoffen angeordnet ist.

Die Vorrichtung kann beispielsweise mit einer Fläche der Deckfläche von etwa 0,15 m² bis etwa 6 m² ausgebildet sein.

Ausführungsbeispiele der Erfindung sind in den Fig. 1 bis 3 dargestellt. Es zeigen:
- Fig. 1a, 1b: perspektivische Ansichten einer Vorrichtung gemäß der Erfindung
- Fig. 2: eine Explosionsdarstellung zur Fig. 1
- Fig. 3: eine Schnittdarstellung zur Fig. 1
- Fig. 4a, 4b: eine alternative Ausbildung des Grundkörpers in Schnittdarstellungen

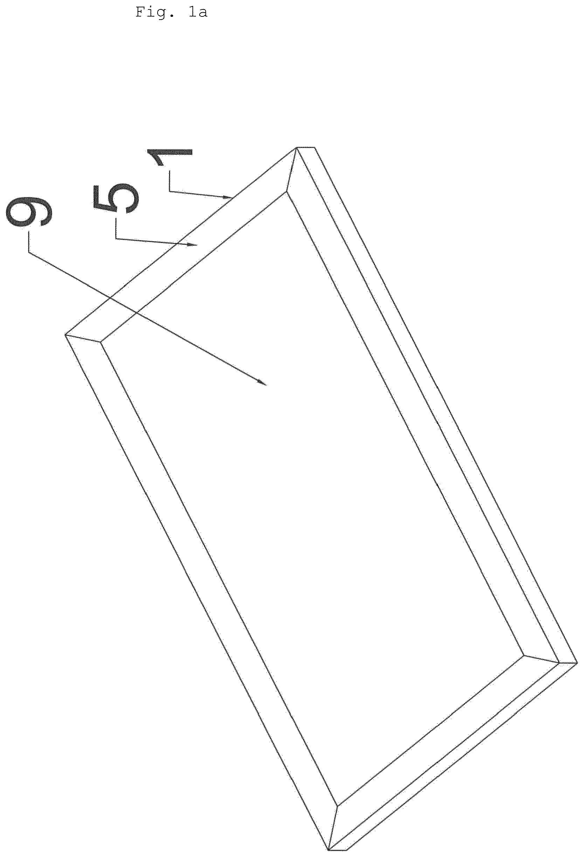

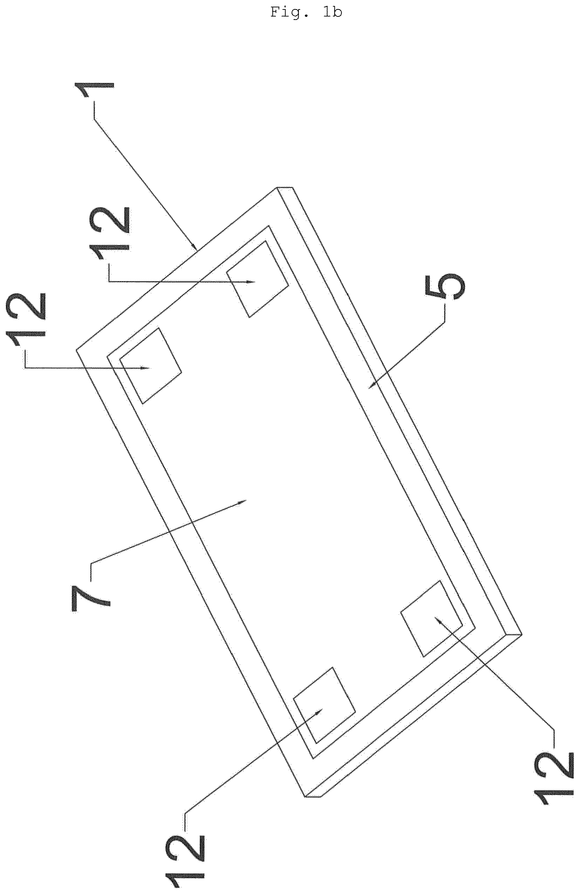

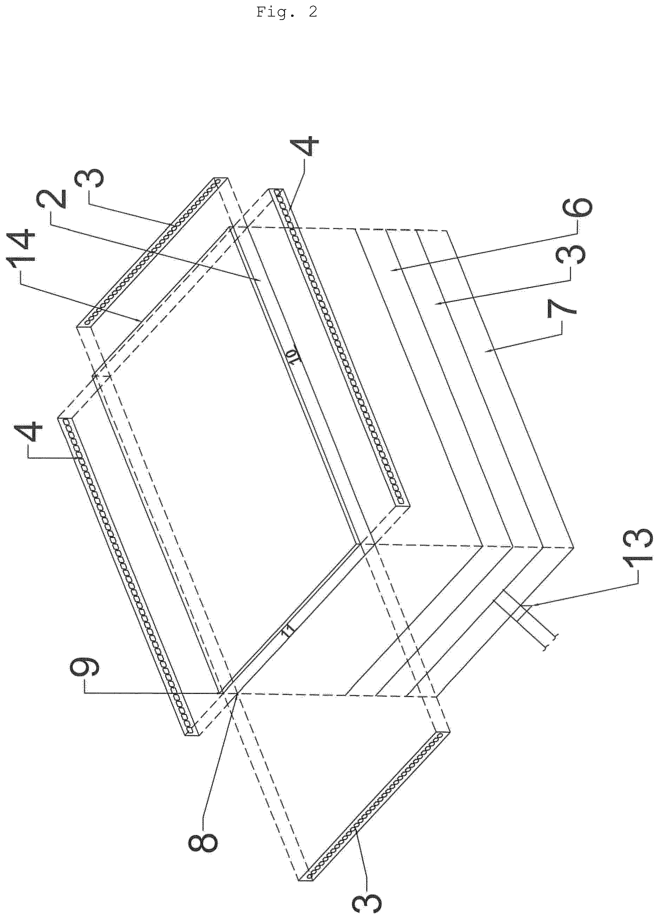

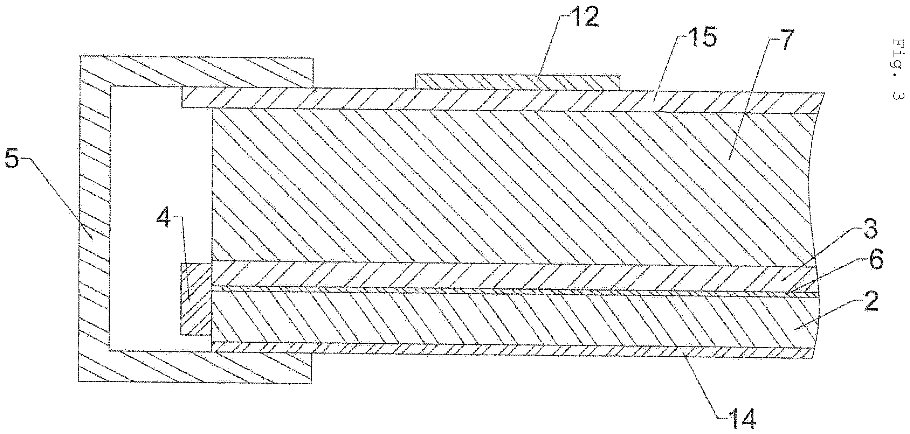

Ein Ausführungsbeispiel der erfindungsgemäßen Vorrichtung 1 ist in einer Ansicht auf die lichtemittierende Vorderseite (Fig. 1a) bzw. die hier als Montageseite dienende Rückseite (Fig. 1b) dargestellt. Man erkennt den hier umlaufend ausgebildeten Rahmen 5 und die Deckfläche 9 des Grundkörpers 2. Die an sich vorhandene Diffusorschicht 14 ist in Fig. 2 und 3 dargestellt. An der Rückseite sind hier vier (die Anzahl kann variieren) Mittel 12 aus einem magnetisierbaren Material angeordnet. Über nicht gezeigte Magneten kann die Befestigung der Vorrichtung 1 an einer gewünschten Fläche erfolgen. Die Rückseite wird abgesehen vom Rahmen 5 durch eine Wärmeisolierschicht 7 gebildet. Wie in Fig. 3 gezeigt, könnte zusätzlich noch eine Rückplatte 15 vorgesehen sein, an welcher dann die Mittel 12 angeordnet wären und welche vom Rahmen 5 umfasst wäre.

Fig. 2 zeigt eine Explosionsdarstellung zur Fig. 1a, 1b, welche den Aufbau dieses Ausführungsbeispiels illustriert. Der Übersicht halber ist hier der Rahmen 5 nicht gezeigt. Dieses Ausführungsbeispiel stellt in dem Sinne eine Maximalversion der Erfindung dar, als sowohl eine Wärmequelle 3 in Form einer Heizmatte (versorgt über elektrische Anschlüsse 13) als auch eine Wärmequelle 3 in Form zweier Streifen mit IR-LED vorgesehen sind. Die Lichtquelle 4 ist hier in Form zweier Streifen mit LED (optischen LED) ausgebildet. Die Streifen mit IR-LED und die Streifen mit LED sind an einem zweiten Abschnitt 11 (IR-LED) bzw. an einem ersten Abschnitt 10 (optische LED) der Mantelfläche des Grundkörpers 2 angeordnet. Anders als dargestellt, könnten auch Streifen eingesetzt werden, welche sowohl IR-LED als auch optische LED tragen. Die als Heizmatte ausgebildete Wärmequelle 3 ist benachbart zu der Grundfläche 8 des Grundkörpers 2 angeordnet. Eine Reflektorschicht 6 ist zwischen der Heizmatte und der Grundfläche 8 des Grundkörpers 2 angeordnet. Es wäre auch vorstellbar, alternativ oder zusätzlich Heizmatten an der Deckfläche 9 des Grundkörpers 2 anzuordnen, sofern diese die Deckfläche 9 nicht komplett bedecken. Die elektrischen Anschlüsse der Lichtquelle 4 und der Wärmequelle 3 sind der Übersichtlichkeit halber nicht dargestellt.

An der Deckfläche 9 ist in diesem Ausführungsbeispiel eine Diffusorschicht 14 angeordnet.

Anders als dargestellt, könnte auch zumindest jene Oberfläche der Heizmatte, welche dem Grundkörper 2 zugewandt ist, lichtreflektierend ausgebildet sein. Bekannte Heizmatten weisen einen Aufbau mit einer einen hohen Grafitanteil aufweisenden Folie auf, die beidseitig mit einer Schutzfolie bedeckt ist. Eine oder beide Schutzfolien können lichtreflektierend ausgebildet sein. Die Anordnung einer gesonderten Reflektorschicht 6, bei welcher sich eine Luftschicht zwischen der Heizmatte und der Reflektorschicht 6 befinden kann, kann dann entfallen., was bei gleicher Heizleistung einen Anstieg der abgegebenen Temperatur von 3 - 5 °C bewirken kann.

Fig. 3 zeigt einen Schnitt durch die Vorrichtung 1 im Bereich des ersten Abschnitts 10 der Mantelfläche, wobei insbesondere der Rahmen 5 und die Anordnung des Lichtelements 4 im Rahmen 5 erkennbar ist. Die Ausbildung im Bereich des zweiten Abschnitts 11 der Mantelfläche kann ebenso gewählt sein. In Fig. 3 ist auch die hier vorgesehene Rückplatte 15 erkennbar.

Die Streuvorrichtung, welche sich innerhalb des Grundkörpers 2 befindet, ist in den Fig. 1 bis 3 nicht dargestellt.

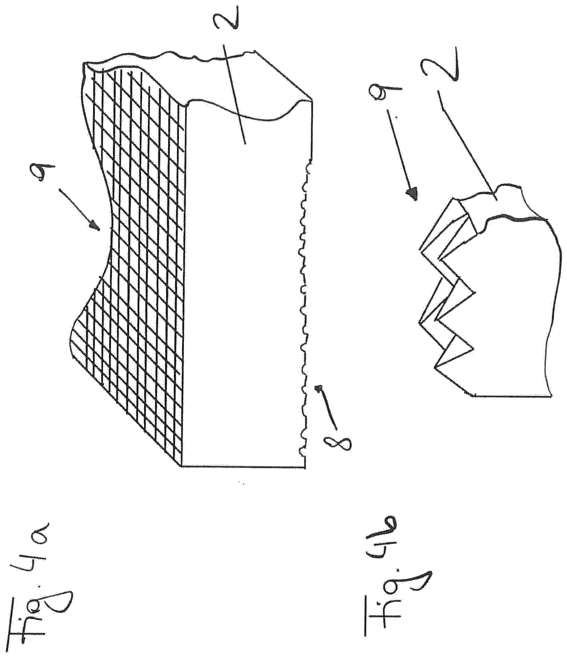

Fig. 4a zeigt den Grundkörper 2 aus Gründen der Übersichtlichkeit in Isolation dargestellt. Erkennbar ist die im Bereich der Grundfläche 8 des Grundkörpers 2 angeordnete Streuvorrichtung, welche hier in Form von oberflächennah eingebrachten, punktförmigen Vertiefungen im Grundkörper 2 (welche sich über die gesamte Grundfläche 8 des Grundkörpers 2 erstrecken) ausgebildet ist. Im Bereich der Deckfläche 9 des Grundkörpers 2 ist eine Diffusorschicht ausgebildet (hier in Form zweier sich kreuzender prismatischer Strukturen, sodass sich eine Anordnung von Pyramiden ergibt - vgl. Fig. 4b), sodass die Anordnung einer gesonderten Diffusorschicht 14 nicht erforderlich ist. Allgemein kann eine diffundierende Wirkung durch eine raue Ausbildung der Deckfläche 9 des Grundkörpers 2 erfolgen. Im Vergleich zur Anordnung einer gesonderten Diffusorschicht 14 bringt die Ausbildung der Diffusorschicht in der Deckfläche 9 des Grundkörpers 2 einen verbesserten Austritt von Wärmestrahlung und Licht.

Im Ausführungsbeispiel ist der Grundkörper 2 als Quader ausgebildet. Andere Ausbildungen sind denkbar, wie z. B. allgemein als Prisma mit polygonaler Grundfläche 8, oder mit einer gekrümmten Mantelfläche.

Anders als dargestellt, müssen die gezeigten Schichten bzw. der Grundkörper 2 nicht eben ausgebildet sein.

## Patentansprüche

1. Vorrichtung (1) für die kombinierte Abgabe von Wärmestrahlung und Licht, mit:
- zumindest einer Wärmestrahlung abgebenden Wärmequelle (3) und
- zumindest einem Licht emittierenden Leuchtelement (4), welches zumindest eine, vorzugsweise eine Vielzahl von, LED aufweist,
**dadurch gekennzeichnet, dass**
- die Vorrichtung (1) einen opaken oder zumindest teiltransparenten, plattenförmigen, Grundkörper (2) aufweist, der eine Mantelfläche, eine Deckfläche (9) und eine Grundfläche (8) aufweist,
- das zumindest eine Leuchtelement (4) benachbart zu oder an einem ersten Abschnitt (10) der Mantelfläche des Grundkörpers (2) angeordnet ist, sodass von dem zumindest einen Leuchtelement (4) emittiertes Licht in den Grundkörper (2) eintritt,
- eine im Grundkörper (2) angeordnete Streuvorrichtung vorgesehen ist, welche in den Grundkörper (2) eingetretenes Licht an der Deckfläche (9) des Grundkörpers (2) auskoppelt, und
- die zumindest eine Wärmequelle (3) eine Heizmatte und/oder zumindest eine, vorzugsweise eine Vielzahl von, IR-LED aufweist, wobei benachbart zur Grundfläche (8) des Grundkörpers (2) eine, vorzugsweise aus Kunststoff bestehende, Lichtreflektorschicht (6) angeordnet ist oder zumindest eine der Oberflächen der Heizmatte lichtreflektierend ausgebildet ist.

2. Vorrichtung nach dem vorangehenden Anspruch, wobei die zumindest eine Wärmequelle (3) benachbart zu oder an der Grundfläche (8) und/oder benachbart zu oder an der Deckfläche (9) und/oder benachbart zu oder an einem zweiten Abschnitt (11) der Mantelfläche des Grundkörpers (2) angeordnet ist.

3. Vorrichtung nach einem der vorangehenden Ansprüche, wobei der Grundkörper (2) prismatisch mit polygonaler Grundfläche (8) ausgebildet ist.

4. Vorrichtung nach einem der vorangehenden Ansprüche, wobei benachbart zur Deckfläche (9) des Grundkörpers (2) eine Diffusorschicht (14) angeordnet oder in der Deckfläche (9) des Grundkörpers (2) ausgebildet ist.

5. Vorrichtung nach einem der vorangehenden Ansprüche, wobei der Grundkörper (2) wenigstens teilweise in einem, vorzugsweise umlaufenden, Rahmen (5) angeordnet ist.

6. Vorrichtung nach einem der vorangehenden Ansprüche, wobei benachbart zur Grundfläche (8) des Grundkörpers (2) eine, vorzugsweise aus Kunststoff bestehende, Lichtreflektorschicht (6) angeordnet ist oder die zumindest eine Wärmequelle (3) als Heizmatte ausgebildet ist und zumindest eine der Oberflächen der Heizmatte lichtreflektierend ausgebildet ist.

7. Vorrichtung nach dem vorangehenden Anspruch, wobei die Lichtreflektorschicht (6) zwischen der Wärmequelle (3) und dem Grundkörper (2) angeordnet ist.

8. Vorrichtung nach einem der vorangehenden Ansprüche, wobei benachbart zur Grundfläche (8) des Grundkörpers (2) eine Wärmeisolierschicht (7) angeordnet ist.

9. Vorrichtung nach einem der vorangehenden Ansprüche, wobei der Grundkörper (2) aus einem Kunststoff besteht.

10. Vorrichtung nach wenigstens einem der vorangehenden Ansprüche, wobei die Streuvorrichtung eine Vielzahl von Streuzentren aufweist, die vorzugsweise in einem Raster angeordnet sind.

11. Vorrichtung nach dem vorangehenden Anspruch, wobei die Konzentration der Streuzentren in einem zentralen Bereich des Grundkörpers (2) größer ist als in einem Randbereich des Grundkörpers (2).

12. Vorrichtung nach einem der vorangehenden Ansprüche, wobei benachbart zu oder an der Deckfläche (9) des Grundkörpers (2) eine Dekorschicht, vorzugsweise in Form einer Bedruckung der Deckfläche (9) oder einer Diffusorschicht (14), angeordnet ist.

13. Vorrichtung nach einem der vorangehenden Ansprüche, wobei benachbart zu oder an der Deckfläche (9) des Grundkörpers (2) oder einer Diffusorschicht (14) eine wärmeaktivierbare Substanz zur Abgabe von Duftstoffen angeordnet ist.

## Claims

1. Device (1) for the combined delivery of heat radiation and light, comprising:
- at least one heat radiation emitting heat source (3) and
- at least one light emitting luminous element (4) having at least one, preferably a plurality of LED,
**characterized in that**
- the device (1) has an opaque or at least partially transparent, plate-shaped base body (2), which has a lateral surface, a cover surface (9) and a base surface (8),
- the at least one luminous element (4) is arranged adjacent to or at a first section (10) of the lateral surface of the base body (2), such that light emitted by the at least one luminous element (4) enters the base body (2),
- a scattering device arranged in the base body (2) is provided, which on the cover surface (9) decouples light entered into the base body (2), and
- the at least one heat source (3) comprises a heating mat and / or at least one, preferably a number of IR-LED, wherein adjacent to the base surface (8) of the base body (2) one, preferably made of plastic, light reflector layer is arranged or at least one of the surfaces of the heating mat is configured to be light-reflecting.

2. Device according to the preceding claim, wherein the at least one heat source (3) is arranged adjacent to or on the base surface (8) and / or adjacent to or on the cover surface (9) and / or adjacent to or at a second portion (11) of the lateral surface of the base body (2).

3. Device according to one of the preceding claims, wherein the base body (2) is formed prismatic with a polygonal base surface (8).

4. Device according to one of the preceding claims, wherein adjacent to the cover surface (9) of the base body (2) a diffuser layer (14) is arranged or formed in the cover surface (9) of the base body (2).

5. Device according to one of the preceding claims, wherein the base body (2) is at least partially arranged in a - preferably circumferential - frame (5).

6. Device according to one of the preceding claims, wherein adjacent to the base surface (8) of the base body (2), a light reflector layer (6) - preferably made of plastic - is arranged or the at least one heat source (3) is designed as a heating mat and at least one of the surfaces of the heating mat is designed to reflect light.

7. Device according to the preceding claim, wherein the light reflector layer (6) is arranged between the heat source (3) and the base body (2).

8. Device according to one of the preceding claims, wherein adjacent to the base surface (8) of the base body (2) a heat insulating layer (7) is arranged.

9. Device according to one of the preceding claims, wherein the base body (2) consists of a plastic material.

10. Apparatus according to at least one of the preceding claims, wherein the scattering device comprises a plurality of scattering centres, which are preferably arranged in a grid.

11. Device according to the preceding claim, wherein the concentration of the scattering centres in a central region of the base body (2) is greater than in an edge region of the base body (2).

12. Device according to one of the preceding claims, wherein adjacent to or on the cover surface (9) of the base body (2) a decorative layer, preferably in the form of a printing of the cover surface (9) or a diffuser layer (14) is arranged.

13. Device according to one of the preceding claims, wherein adjacent to or on the cover surface (9) of the base body (2) or a diffuser layer (14) a heat-activatable substance for dispensing fragrances is arranged.

## Revendications

1. Dispositif (1) pour la réflection combinée de rayonnement thermique et de lumière comprenant:
- au moins une source de chaleur (3) réfléchissant un rayonnement thermique et
- au moins un élément lumineux émettant de la lumière (4) et comportant au moins
une ou de préférence une pluralité de diodes électroluminescentes (LED),
**caractérisé en ce que**:
- le dispositif (1) comprend un corps de base (2) en forme de plaque, opaque ou au moins partiellement transparent, ayant une surface latérale, une surface supérieure (9) et une surface de base (8),
- cet au minimum un élément lumineux (4) est disposé de façon adjacente à la
surface latérale du corps de base (2) ou à un premier segment (10) de celle-ci,
de sorte que la lumière émise par cet au minimum un élément lumineux (4)
traverse le corps de base (2),
- un dispositif dispersif disposé dans le corps de base (2) est prévu, qui est à
même de découpler la lumière qui a traversé le corps de base (2) à la surface
supérieure (9), et
- cette au minimum une source de chaleur (3) comprend une nappe chauffante
et / ou au moins une ou de préférence plusieurs diodes électroluminescentes
(IR-LED), dans laquelle une feuille réflectrice de lumière (6), de préférence en
matière plastique, est disposée de façon adjacente à la surface de base (8) du
corps de base (2) ou dans laquelle au moins une des surfaces de la nappe
chauffante est constituée de manière à réfléchir la lumière.

2. Dispositif selon la revendication précédente, dans lequel cette au minimum une
source de chaleur (3) est disposée de façon adjacente à ou sur la surface de
base (8) et / ou de façon adjacente à ou sur la surface supérieure (9) et / ou de
façon adjacente à ou sur un second segment (11) de la surface latérale du corps
de base (2).

3. Dispositif selon l'une des revendications précédentes, dans lequel le corps de
base (2) est de forme prismatique à base polygonale (8).

4. Dispositif selon l'une des revendications précédentes, dans lequel une feuille de
diffuseur est disposée de façon adjacente à la surface supérieure (9) du corps
de base (2) ou est formée à l'intérieur de la surface supérieure (9) du corps de
base (2).

5. Dispositif selon l'une des revendications précédentes, dans lequel le corps de
base (2) est disposé partiellement dans un cadre ou dans lequel le cadre couvre
de préférence toute la circonférence (5).

6. Dispositif selon l'une des revendications précédentes, dans lequel une feuille
réflectrice de lumière (6), de préférence en matière plastique, est adjacente à la
surface de base (8) du corps de base (2) ou dans lequel cette au minimum une
source de chaleur (3) est constituée d'une nappe chauffante et au moins une des
surfaces de la nappe chauffante est constituée de manière à réfléchir la lumière.

7. Dispositif selon la revendication précédente, dans lequel la feuille réflectrice de
lumière (6) est disposée entre la source de chaleur (3) et le corps de base (2).

8. Dispositif selon l'une des revendications suivantes, dans lequel une couche
d'isolation thermique (7) est disposée de façon adjacente à la surface de base (8)
du corps de base (2).

9. Dispositif selon l'une des revendications précédentes, dans lequel le corps de
base (2) est en matière plastique.

10. Dispositif selon au moins l'une des revendications précédentes, dans lequel le
dispositif dispersif comprend une pluralité de centres de diffusion, qui sont de
préférence disposés dans une grille.

11. Dispositif selon la revendication précédente, dans lequel la concentration des
centres de diffusion est plus importante dans une zone centrale du corps de
base (2) que dans la région périphérique du corps de base (2).

12. Dispositif selon l'une des revendications précédentes, dans lequel soit une couche
décorative, présentant de préférence une impression de la surface
supérieure (9),
soit une feuille de diffuseur (14) est disposée de façon adjacente à ou sur la
surface supérieure (9) du corps de base (2).

13. Dispositif selon l'une des revendications précédentes, dans lequel une substance
thermo-activable pour la diffusion de substances odorantes est disposée de façon
adjacente à ou sur la surface supérieure (9) du corps de base (2) ou à une feuille
de diffuseur (14).
